# EUROPEAN PATENT SPECIFICATION

(11) **EP 3 553 974 B1**
(45) Date of publication and mention of the grant of the patent: **14.04.2021**
(21) Application number: 17892749.7
(22) Date of filing: 20.01.2017
(51) Int. Cl.: H04B 10/25, H04N 7/10, H04B 3/54

(54) **DATA PROCESSING METHOD, OPTICAL ACCESS DEVICE, AND OPTICAL ACCESS SYSTEM**
DATENVERARBEITUNGSVERFAHREN, OPTISCHE ZUGANGSVORRICHTUNG, UND OPTISCHES ZUGANGSSYSTEM
PROCÉDÉ DE TRAITEMENT DE DONNÉES, DISPOSITIF D'ACCÈS OPTIQUE, ET SYSTÈME D'ACCÈS OPTIQUE

(43) Date of publication of application: 16.10.2019
(73) Proprietor: Huawei Technologies Co., Ltd., Longgang District Shenzhen, Guangdong 518129 (CN)
(72) Inventor: LIN, Liankui, Shenzhen, Guangdong 518129 (CN); LIU, Fan, Shenzhen, Guangdong 518129 (CN)
(74) Representative: Maiwald Patent- und Rechtsanwaltsgesellschaft mbH
(86) International application number: PCT/CN2017/071988
(87) International publication number: WO 2018/133049

(56) References cited:
- EP-A1- 3 043 494
- WO-A1-2014/187538
- CN-A- 102 916 746
- CN-A- 103 875 240
- JP-A- 2008 160 718
- US-A1- 2015 295 669
- US-A1- 2015 295 669

## Description

### TECHNICAL FIELD

Embodiments of the present invention relate to the optical communications field, and in particular, to a data processing method, an optical access device, and an optical access system.

### BACKGROUND

With continuous development of communications technologies, an optical communications technology is more widely applied. Correspondingly, a network access device in a conventional communications system gradually develops into an optical access device in an optical communications system.

An example in which the optical access device is an optical line terminal (Optical Line Terminal, OLT) is used. Currently, in a downlink signal transmission process, after receiving a downlink signal, an OLT located at a central office (for example, an equipment room) first processes the downlink signal, and then sends the processed downlink signal to a cable modem termination system (Cable Modem Termination System, CMTS) located at a remote end (for example, an outdoor fixed pole or a chassis) in a form of an optical signal. After receiving the optical signal, the CMTS first converts the optical signal into an electrical signal, then processes the electrical signal at a media access control (media access control, MAC) layer and a physical (Physical, PHY) layer, and sends the processed electrical signal to a cable modem (Cable Modem, CM). The CM demodulates the electrical signal received by the CM and sends the demodulated electrical signal to a terminal device. In this way, downlink signal transmission is completed.

However, in the optical communications system, the CMTS is located at the remote end, the CMTS needs to process, at the MAC layer and the PHY layer, the optical signal received by the CMTS, and processing the optical signal at the MAC layer and the PHY layer usually consumes relatively large power. Consequently, power consumption of a device on a remote side is usually relatively large.

EP 3 043 494 A1 discloses a data transmission method, apparatus, and system, which are used to reduce a delay of user uplink data and improve network performance in an HFC network. The method includes: determining, by a cable modem termination system physical layer CMTS PHY layer according to uplink resource assignment information configured by a cable modem termination system Media Access Control layer CMTS MAC layer separately for each cable modem CM of multiple CMs, a time slice that needs to be occupied when uplink data sent from a CM connected to the CMTS PHY layer of the multiple CMs, is forwarded to the CMTS MAC layer; and forwarding, by the CMTS PHY layer to the CMTS MAC layer on the determined time slice, the received uplink data that is sent, by using the uplink resource assignment information configured by the CMTS MAC layer, by the CM connected to the CMTS PHY layer.

US 2015/0295669 A1 describes a method for managing time offset and frequencydrift in asynchronous Data Over Cable Service InterfaceSpecification (DOCSIS) Remote Physical layer (R-PHY)network environments. The method includes receiving, ata first hardware device, time synchronization message from are mote second hardware device in the DOCSIS R-PHY net-work, determining a time difference between a first clock at the first hardware device and a second clock at the secondhardware device from the time synchronization message, andre-stamping an event message based on the time difference.

### SUMMARY

This application provides a data processing method, an optical access device, and an optical access system, to reduce power consumption of a device on a remote side.

The invention is defined by the appended claims. Embodiments and examples not covered by the claims are meant to illustrate, and facilitate the understanding of, the claimed invention.

### BRIEF DESCRIPTION OF DRAWINGS

FIG. 1 is a schematic architectural diagram of a communications system according to an embodiment of the present invention;
FIG. 2 is a schematic architectural diagram 1 of an optical access system according to an embodiment of the present invention;
FIG. 3 is a schematic architectural diagram 2 of an optical access system according to an embodiment of the present invention;
FIG. 4 is a schematic structural diagram 1 of an optical access device according to an embodiment of the present invention;
FIG. 5 is a schematic structural diagram 2 of an optical access device according to an embodiment of the present invention;
FIG. 6 is a schematic structural diagram 3 of an optical access device according to an embodiment of the present invention;
FIG. 7 is a schematic diagram 1 of a data processing method according to an embodiment of the present invention;
FIG. 8 is a schematic diagram 2 of a data processing method according to an embodiment of the present invention;
FIG. 9 is a schematic diagram 3 of a data processing method according to an embodiment of the present invention; and
FIG. 10 is a schematic diagram 4 of a data processing method according to an embodiment of the present invention.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in the embodiments of the present invention, the terms "first", "second", "third", "fourth", and so on are intended to distinguish between different objects but do not indicate a particular order of the objects. For example, first downlink data, second downlink data, and the like are used to distinguish between different downlink data, but are not used to describe a specific sequence of the downlink data.

In addition, in the embodiments of the present invention, the word "exemplary" or "for example" is used to represent giving an example, an illustration, or a description. Any embodiment or design scheme described as an "exemplary" or "for example" in the embodiments of the present invention should not be explained as being more preferred or having more advantages than another embodiment or design scheme. Exactly, use of the word "exemplary" or "example" or the like is intended to present a related concept in a specific manner.

In the descriptions in the embodiments of the present invention, unless otherwise specified, "a plurality of' means two or more than two. For example, a plurality of PHY processing entities are two or more PHY processing entities.

The following describes the technical solutions in the embodiments of the present invention in detail with reference to the accompanying drawings in the embodiments of the present invention.

An example in which an optical access device is an OLT is used. Generally, in a downlink signal transmission process, the OLT at a central office receives a downlink signal, processes the downlink signal, and then sends the processed downlink signal to a CMTS at a remote end in a form of an optical signal. The CMTS receives the optical signal, converts the optical signal into an electrical signal, and processes the electrical signal at a MAC layer and a PHY layer. The CMTS is located at the remote end, the CMTS needs to process, at the MAC layer and the PHY layer, an optical signal received by the CMTS, and processing the optical signal at the MAC layer and the PHY layer usually consumes relatively large power. Consequently, power consumption of a device on a remote side is usually relatively large.

To resolve the problem, the embodiments of the present invention provide a data processing method, an optical access device, and an optical access system. In a process in which a device in an optical network sends downlink data to a terminal device of a user, an optical access device located at a central office in the optical access system may receive the downlink data (referred to as first downlink data below), perform first processing on the first downlink data at a MAC layer in the optical access device, to obtain second downlink data in a form of a digital electrical signal, and send the second downlink data in a form of a digital electrical signal to at least one PHY processing entity located at a remote end in the optical access system in a form of a digital optical signal. Each PHY processing entity in the at least one PHY processing entity receives the second downlink data sent by the optical access device, performs second processing on the second downlink data at the PHY layer to obtain third downlink data, and sends the third downlink data to the CM. The CM demodulates the third downlink data received by the CM and sends the third downlink data to the terminal device, so that the terminal device receives the first downlink data sent by the optical network. Compared with the prior art, in the optical access system provided in the embodiments of the present invention, the first processing may be performed on the first downlink data at the MAC layer in the optical access device located at a central office, and the second processing may be performed on the second downlink data at the PHY layer in the PHY processing entity located at a remote end. Therefore, there is no need to integrate functions of the MAC layer in a device on a remote side. To be specific, the device on a remote side does not need to perform the first processing on the first downlink data. In this case, the device on a remote side can reduce power consumption brought by the first processing according to the embodiments of the present invention, in other words, the optical access device and the optical access system provided in the embodiments of the present invention can reduce power consumption of the device on a remote side.

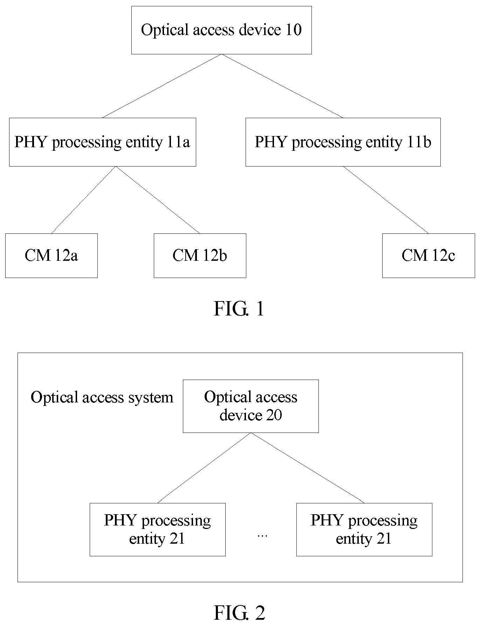

The data processing method provided in the embodiments of the present invention may be applied to the optical access device, the optical access device may be applied to the optical access system, and the optical access system may be applied to a communications system in which fiber optic communications is used. FIG. 1 is a schematic architectural diagram of a communications system according to an embodiment of the present invention. As shown in FIG. 1, the communications system includes an optical access device 10, at least one PHY processing entity (it is assumed that there are two PHY processing entities in the communications system shown in FIG. 1: a PHY processing entity 11a and a PHY processing entity 11b), and at least one CM (it is assumed that there are three CMs in the communications system shown in FIG. 1: a CM 12a, a CM 12b, and a CM 12c). The optical access device 10 is connected to each PHY processing entity (namely, the PHY processing entity 11a and the PHY processing entity 11b) in the at least one PHY processing entity. Each PHY processing entity is connected to the at least one CM. For example, as shown in FIG. 1, the PHY processing entity 11a may be connected to the CM 12a and the CM 12b, and the PHY processing entity 11b may be connected to the CM 12c. The optical access device 10 may send, in a form of a digital optical signal, downlink data received by the optical access device 10 to each PHY processing entity in the at least one PHY processing entity. Then, each PHY processing entity may convert the downlink data that is in a form of a digital optical signal and that is received by each PHY processing entity into the downlink data in a form of a digital electrical signal, and then convert the downlink data in a form of a digital electrical signal into the downlink data in a form of an analog electrical signal, so that each PHY processing entity can send the downlink data in a form of an analog electrical signal to the at least one CM connected to each PHY processing entity.

It should be noted that, in this embodiment of the present invention, the PHY processing entity may be a device or an entity that integrates PHY processing functions, or may be an independent PHY processing device. In addition, in the communications system, a quantity of PHY processing entities may be set based on an actual deployment requirement of an optical network. This is not specifically limited in this embodiment of the present invention. In other words, the quantity of PHY processing entities in the communications system shown in FIG. 1 is merely used as an example to describe the communications system provided in this embodiment of the present invention, and the quantity does not constitute any limitation on the communications system provided in this embodiment of the present invention.

In this embodiment of the present invention, in the schematic architectural diagram of the communications system shown in FIG. 1, the optical access device 10 and the at least one PHY processing entity may be referred to as an optical access system. The optical access system may transmit uplink data and downlink data. Specifically, in a downlink data transmission process, the optical access system may receive downlink data (for example, video data) sent by a device (for example, a switch or a router) in the optical network, process the downlink data to obtain the downlink data in a form of a digital optical signal, convert the downlink data in a form of a digital optical signal into the downlink data in a form of a digital electrical signal, convert the downlink data in a form of a digital electrical signal into the downlink data in a form of an analog electrical signal, and then send the downlink data in a form of an analog electrical signal to a CM on a side of a terminal device. The CM sends the downlink data in a form of an analog electrical signal to the terminal device, so as to implement downlink data transmission. In an uplink data transmission process, the optical access system may receive uplink data (for example, request data of the terminal device) that is in a form of an analog electrical signal and that is sent by the CM on the side of the terminal device, convert the uplink data in a form of an analog electrical signal into the uplink data in a form of a digital electrical signal, convert the uplink data in a form of a digital electrical signal into the uplink data in a form of a digital optical signal, and then process the uplink data in a form of a digital optical signal, and send the processed uplink data in a form of a digital optical signal to the device in the optical network, or send the processed uplink data in a form of a digital optical signal to the device in the optical network in a form of a digital electrical signal, so as to implement uplink data transmission. The optical access system provided in the embodiments of the present invention is described in detail below by using downlink data transmission and uplink data transmission as an example.

First, the optical access system provided in the embodiments of the present invention is described for illustration purposes by using an example in which the downlink data is transmitted in the optical access system.

With reference to FIG. 1, FIG. 2 is a schematic architectural diagram of an optical access system according to an embodiment of the present invention. The optical access system includes an optical access device 20 and at least one PHY processing entity 21 connected to the optical access device 20.

The optical access device 20 is configured to: receive downlink data (briefly referred to as first downlink data below) sent by a device (for example, a switch or a router) in an optical network, perform first processing on the first downlink data at a MAC layer of the optical access device 20 to obtain second downlink data in a form of a digital electrical signal, and send, in a form of a digital optical signal, the second downlink data in a form of a digital electrical signal to the at least one PHY processing entity (specifically, the second downlink data may be sent to each PHY processing entity in the at least one PHY processing entity).

Each PHY processing entity in the at least one PHY processing entity 21 shown in FIG. 2 is configured to: receive the second downlink data that is in a form of a digital optical signal and that is sent by the optical access device 20, perform second processing on the second downlink data in a form of a digital optical signal at a PHY layer of the PHY processing entity to obtain third downlink data in a form of an analog electrical signal, and send the third downlink data in a form of an analog electrical signal to a CM.

Optionally, in this embodiment of the present invention, the first processing may include packet splitting and encapsulating of downlink data.

For example, in this embodiment of the present invention, the performing first processing on the first downlink data at the MAC layer in the optical access device may include: the optical access device performs packet splitting on the first downlink data received by the optical access device, and then encapsulates the first downlink data obtained after the packet splitting, to obtain the second downlink data in a form of a digital electrical signal.

It should be noted that, in this embodiment of the present invention, that the optical access device receives the first downlink data is specifically that the optical access device successively receives data packets sent by a device in the optical network, so as to receive the first downlink data. For example, the first processing is described by using an example in which the first downlink data is a data packet (briefly referred to as a first data packet below).

Specifically, after the optical access device receives the first downlink data, in a process in which the optical access device processes and transmits the first downlink data at the MAC layer of the optical access device, because a length of a data packet that can be processed and transmitted at the MAC layer is limited, when a length of a data packet in the first downlink data exceeds a maximum length of the data packet that can be processed at the MAC layer, the optical access device may perform packet splitting on the first downlink data, in other words, the first data packet is divided into a plurality of data packets of a relatively small length (briefly referred to as sub-data packets below), and further implement smooth processing and transmission of the first downlink data at the MAC layer by processing and transmitting the plurality of sub-data packets at the MAC layer.

Further, in a process of transmitting the first downlink data at the MAC layer, if a transmission error (for example, a packet loss) occurs, in this embodiment of the present invention, a sub-data packet in which a transmission error occurs may be resent, without a need to resend a data packet that is corresponding to the sub-data packet and that is obtained before packet splitting. Therefore, overheads of resending a data packet in which a transmission error occurs can be reduced.

For example, the first data packet is used as an example. It is assumed that a length of a payload of the first data packet is 2000 bytes (byte), and a maximum length of a data packet that can be processed and transmitted at the MAC layer is 1460 bytes. In this case, packet splitting may be performed on the first data packet, in other words, the first data packet is divided into a plurality of sub-data packets. For example, the first data packet may be divided into a 1460-byte sub-data packet (which may be referred to as a first sub-data packet) and a 540-byte sub-data packet (which may be referred to as a second sub-data packet). Each sub-data packet obtained after the packet splitting is packaged based on a packet header of the first data packet. In this way, functional units (for example, a switching control unit in the embodiments of the present invention) of the plurality of sub-data packets are received, so as to learn that the plurality of sub-data packets are the sub-data packets in the first data packet.

In this embodiment of the present invention, after performing packet splitting on the first downlink data, the optical access device may encapsulate the plurality of sub-data packets obtained after the packet splitting, to obtain the encapsulated downlink data, to be specific, to obtain the second downlink data in a form of a digital electrical signal. For example, the optical access device may encapsulate, according to the Ethernet protocol, the plurality of sub-data packets obtained after the packet splitting into Ethernet data.

In this embodiment of the present invention, after the optical access device encapsulates the plurality of sub-data packets obtained after the packet splitting to obtain the second downlink data in a form of a digital electrical signal, the optical access device may further allocate, to the second downlink data in a form of a digital electrical signal, a channel for sending the second downlink data in a form of a digital electrical signal and allocate, to the second downlink data in a form of a digital electrical signal, bandwidth for transmitting the second downlink data in a form of a digital electrical signal. For example, the optical access device may allocate, to the second downlink data in a form of a digital electrical signal, a downlink channel with better channel quality and allocate, to the second downlink data in a form of a digital electrical signal, bandwidth that can meet a transmission rate requirement of the second downlink data in a form of a digital electrical signal, so that the second downlink data in a form of a digital electrical signal is smoothly transmitted on the downlink channel.

It should be noted that the optical access system provided in this embodiment of the present invention may include at least one optical access device, and a quantity of optical access devices may be determined based on an actual use requirement. This is not specifically limited in this embodiment of the present invention.

In this embodiment of the present invention, the optical access device may send, in a form of a digital optical signal, the second downlink data in a form of a digital electrical signal to the at least one PHY processing entity. Specifically, the optical access device may convert the second downlink data in a form of a digital electrical signal into a digital optical signal, and then send the digital optical signal to the at least one PHY processing entity.

It should be noted that, in this embodiment of the present invention, an interface unit in the optical access device may convert the second downlink data in a form of a digital electrical signal into the second downlink data in a form of a digital optical signal, or another functional unit that has a signal form conversion function may convert the second downlink data in a form of a digital electrical signal into the second downlink data in a form of a digital optical signal. This is not limited in this embodiment of the present invention.

Optionally, in this embodiment of the present invention, the second processing may include: converting downlink data in a form of a digital optical signal into the downlink data in a form of a digital electrical signal, and converting the downlink data in a form of a digital electrical signal into the downlink data in a form of an analog electrical signal.

For example, in this embodiment of the present invention, that each PHY processing entity in the at least one PHY processing entity performs second processing on the second downlink data in a form of a digital electrical signal at the PHY layer of the PHY processing entity may include: each PHY processing entity converts the second downlink data that is in a form of a digital optical signal and that is received by the PHY processing entity into the downlink data in a form of a digital electrical signal, and converts the downlink data in a form of a digital electrical signal into the downlink data in a form of an analog electrical signal, namely, the third downlink data in a form of an analog electrical signal.

It should be noted that, in this embodiment of the present invention, in the optical access system, in a downlink data transmission process, the optical access system (specifically, a PHY processing entity in the optical access system) may send downlink data (namely, the third downlink data in a form of an analog electrical signal) that is in a form of an analog electrical signal and that is output by the optical access system to a CM on a side of a terminal device. To resolve a linear distortion problem in the transmission process of the downlink data in a form of an analog electrical signal, a PHY processing entity (the PHY processing entity is usually located near a CM on a side of the terminal device) may convert the downlink data in a form of a digital optical signal into the downlink data in a form of a digital electrical signal, and then convert the downlink data in a form of a digital electrical signal into the downlink data in a form of an analog electrical signal. A digital signal has a strong anti-interference capability in a transmission process, in other words, stability of the digital signal is relatively good. Therefore, transmitting the downlink data in a form of a digital signal may reduce linear distortion of the downlink data in the transmission process.

According to the optical access system provided in this embodiment of the present invention, the optical access device located at a central office in the optical access system may receive the first downlink data, perform first processing on the first downlink data at the MAC layer of the optical access device to obtain the second downlink data in a form of a digital electrical signal, and send the second downlink data in a form of a digital electrical signal to at least one PHY processing entity located at a remote end in the optical access system in a form of a digital optical signal. Each PHY processing entity in the at least one PHY processing entity receives the second downlink data that is in a form of a digital optical signal and that is sent by the optical access device, performs second processing on the second downlink data in a form of a digital optical signal at the PHY layer to obtain the third downlink data in a form of an analog electrical signal, and sends the third downlink data in a form of an analog electrical signal to the CM. The CM demodulates the third downlink data that is in a form of an analog electrical signal and that is received by the CM and sends the third downlink data in a form of an analog electrical signal to the terminal device, so that the terminal device receives the first downlink data sent by the optical network. Compared with the prior art, in the optical access system provided in this embodiment of the present invention, the first processing may be performed on the first downlink data at the MAC layer in the optical access device located at a central office, and the second processing may be performed on the second downlink data in a form of a digital optical signal at the PHY layer in the PHY processing entity located at a remote end. Therefore, there is no need to integrate functions of the MAC layer in a device on a remote side. To be specific, the device on a remote side does not need to perform the first processing on the first downlink data. In this case, the device on a remote side can reduce power consumption brought by the first processing according to this embodiment of the present invention, in other words, the optical access system provided in this embodiment of the present invention can reduce power consumption of the device on a remote side.

In this embodiment of the present invention, when there are a plurality of PHY processing entities in the optical access system, the second downlink data in a form of a digital electrical signal processed at the MAC layer in the optical access device may be sent to each PHY processing entity of the plurality of PHY processing entities in a form of a digital optical signal, so that functions of a plurality of MAC layers do not need to be integrated into a device on a remote side (generally, in the device on a remote side, a MAC functional entity and a PHY processing entity exist in pairs, in other words, one PHY processing entity is corresponding to one MAC functional entity). Therefore, costs of transmitting downlink data in the optical access system may be reduced to some extent.

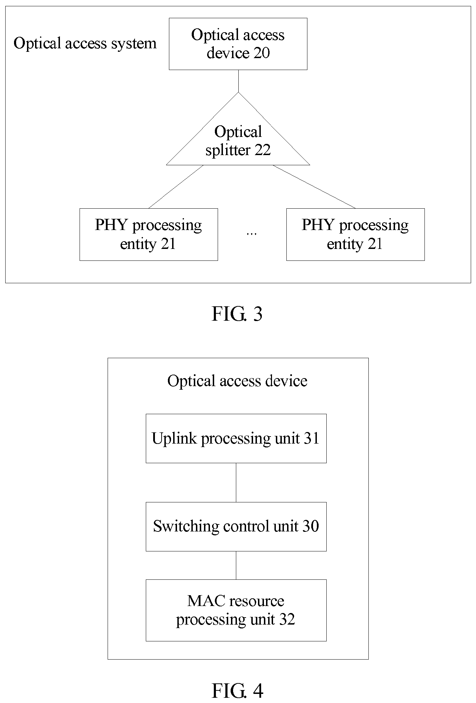

Optionally, with reference to FIG. 2, as shown in FIG. 3, the optical access system provided in this embodiment of the present invention may further include an optical splitter 22. The optical access device 20 is connected to each PHY processing entity in the at least one PHY processing entity 21 by using the optical splitter 22. The optical access device in the optical access system may distribute, by using the optical splitter 22, second downlink data in a form of a digital optical signal to each PHY processing entity.

In this embodiment of the present invention, the optical splitter may be configured to distribute downlink data. The optical splitter may include at least one uplink optical interface and a plurality of downlink optical interfaces. The optical splitter may receive, from one uplink optical interface of the optical splitter, downlink data (for example, the second downlink data in a form of a digital optical signal) that is in a form of a digital optical signal and that is output by an upper-level device (for example, the optical access device (for example, an OLT)), and allocate the downlink data in a form of a digital optical signal to the plurality of downlink optical interfaces of the optical splitter, so as to send, by using the plurality of downlink optical interfaces, the downlink data in a form of a digital optical signal to a plurality of lower-level devices connected to the optical splitter.

It should be noted that, in this embodiment of the present invention, a quantity of downlink optical interfaces of the optical splitter is generally greater than or equal to a quantity of PHY processing entities connected to the downlink optical interface of the optical splitter.

For example, in this embodiment of the present invention, the optical splitter 22 shown in FIG. 3 may allocate the second downlink data in a form of a digital optical signal to N (N≥1) downlink optical interfaces of the optical splitter 22, where each optical interface of the N downlink optical interfaces is connected to one PHY processing entity in the at least one PHY processing entity, and then the optical splitter may send the second downlink data in a form of a digital optical signal to the at least one PHY processing entity 21 by using the N downlink optical interfaces of the optical splitter. There are N PHY processing entities in the optical access system.

In this embodiment of the present invention, the optical access device may send, by using the optical splitter, the second downlink data that is in a form of a digital optical signal and that is output by the optical access device to a plurality of PHY processing entities, and the plurality of PHY processing entities send third downlink data that is in a form of an analog electrical signal and that is processed by the PHY processing entities to different CMs on a side of a terminal device. Therefore, the downlink data can be sent to the plurality of different CMs. In this way, a plurality of optical access devices are not required in the optical access system, thereby reducing transmission costs of the optical access system.

It should be noted that, a structure of the optical access device in the optical access system provided in this embodiment of the present invention and a process of processing and transmitting downlink data by the optical access device are described in detail in the following embodiments.

Further, the optical access system provided in the embodiments of the present invention is described below for illustration purposes by using an example in which the uplink data is transmitted in the optical access system.

FIG. 2 is a schematic architectural diagram of an optical access system according to an embodiment of the present invention. The optical access system includes an optical access device 20 and at least one PHY processing entity 21 connected to the optical access device 20.

Each PHY processing entity in the at least one PHY processing entity 21 is configured to receive uplink data (referred to as first uplink data in a form of an analog electrical signal below) that is in a form of an analog electrical signal and that is sent by at least one CM connected to the PHY processing entity. Each PHY processing entity processes, at a PHY layer, the first uplink data in a form of an analog electrical signal to obtain second uplink data in a form of a digital optical signal, and sends the second uplink data in a form of a digital optical signal to the optical access device 20.

The optical access device 20 shown in FIG. 2 is configured to receive the second uplink data that is in a form of a digital optical signal and that is sent by the at least one PHY processing entity. In addition, the optical access device 20 may convert the second uplink data in a form of a digital optical signal into the second uplink data in a form of a digital electrical signal, and process the second uplink data in a form of a digital electrical signal at a MAC layer in the optical access device to obtain third uplink data in a form of a digital electrical signal. The optical access device sends the third uplink data in a form of a digital electrical signal to a device (for example, a switch or a router) in an optical network or sends the third uplink data in a form of a digital electrical signal to a device in an optical network in a form of a digital optical signal, so as to implement uplink data transmission.

Optionally, in this embodiment of the present invention, that the at least one PHY processing entity processes the first uplink data in a form of an analog electrical signal may include: converting the first uplink data in a form of an analog electrical signal into the uplink data in a form of a digital electrical signal, and converting the uplink data in a form of a digital electrical signal into the uplink data in a form of a digital optical signal.

For example, in this embodiment of the present invention, the first uplink data that is in a form of an analog electrical signal and that is received by the at least one PHY processing entity may be request data. The request data may include Internet access authentication data of a terminal device and video request data of the terminal device. After each PHY processing entity in the at least one PHY processing entity receives the first uplink data that is in a form of an analog electrical signal and that is sent by the at least one CM connected to the PHY processing entity, the PHY processing entity may convert the first uplink data in a form of an analog electrical signal into the uplink data in a form of a digital electrical signal at a PHY layer of the PHY processing entity, convert the uplink data in a form of a digital electrical signal into the uplink data in a form of a digital optical signal to obtain the second uplink data in a form of a digital optical signal, and then send the second uplink data in a form of a digital optical signal to the optical access device.

Optionally, in this embodiment of the present invention, that the optical access device processes, at the MAC layer of the optical access device, the second uplink data in a form of a digital electrical signal may include: decapsulating the second uplink data in a form of a digital electrical signal. For example, the optical access device may decapsulate, at the MAC layer of the optical access device, the second uplink data in a form of a digital electrical signal. For example, the optical access device may decapsulate, according to the Ethernet protocol, the second uplink data in a form of a digital electrical signal to obtain the third uplink data in a form of a digital electrical signal.

According to the optical access system provided in this embodiment of the present invention, each PHY processing entity in the at least one PHY processing entity in the optical access system may receive the uplink data (for example, the first uplink data in a form of an analog electrical signal) that is in a form of an analog electrical signal and that is sent by the at least one CM connected to the PHY processing entity, process, at the PHY layer of the PHY processing entity, the first uplink data in a form of an analog electrical signal to obtain the second uplink data in a form of a digital optical signal, and send the second uplink data in a form of a digital optical signal to the optical access device. The optical access device receives the second uplink data that is in a form of a digital optical signal and that is sent by the at least one PHY processing entity, converts the second uplink data in a form of a digital optical signal into the second uplink data in a form of a digital electrical signal, processes, at the MAC layer of the optical access device, the second uplink data in a form of a digital electrical signal to obtain the third uplink data in a form of a digital electrical signal, and sends the third uplink data in a form of a digital electrical signal to a device in the optical network, or sends the third uplink data in a form of a digital electrical signal to a device in the optical network in a form of a digital optical signal. Compared with the prior art, in the optical access system provided in this embodiment of the present invention, the first uplink data in a form of an analog electrical signal may be processed at the PHY layer in the PHY processing entity located at a remote end, and the second uplink data in a form of a digital electrical signal may be processed at the MAC layer in the optical access device located at a central office. Therefore, there is no need to integrate functions of the MAC layer in a device on a remote side, so that the device on a remote side can reduce power consumption brought by processing the second uplink data in a form of a digital electrical signal at the MAC layer to some extent according to this embodiment of the present invention, in other words, the optical access system provided in this embodiment of the present invention can reduce power consumption of the device on a remote side.

In this embodiment of the present invention, when there are a plurality of PHY processing entities in the optical access system, the first uplink data that is sent by the terminal device by using a plurality of CMs and a plurality of PHY processing entities may be processed at the MAC layer in the optical access device in the optical access system. Therefore, functions of a plurality of MAC layers do not need to be integrated in a device on a remote side (generally, in the device on a remote side, a MAC functional entity and a PHY processing entity exist in pairs, in other words, one PHY processing entity is corresponding to one MAC functional entity). Therefore, costs of transmitting uplink data in the optical access system may be reduced to some extent.

Optionally, as shown in FIG. 3, the optical access system may further include an optical splitter 22. The optical access device 20 is connected to each PHY processing entity in the at least one PHY processing entity 21 by using the optical splitter 22. The optical splitter 22 is configured to: aggregate second uplink data that is in a form of a digital optical signal and that is sent by each PHY processing entity, and send the aggregated second uplink data in a form of a digital optical signal to the optical access device.

In this embodiment of the present invention, the optical splitter may be configured to aggregate uplink data in addition to distributing downlink data. The optical splitter may include at least one uplink optical interface and a plurality of downlink optical interfaces. The optical splitter may receive, by using a plurality of downlink optical interfaces of the optical splitter, uplink data that is in a form of a digital optical signal and that is sent by a plurality of lower-level devices connected to the optical splitter, and aggregate the plurality pieces of uplink data in a form of a digital optical signal to one uplink optical interface of the optical splitter, so as to send the aggregated uplink data in a form of a digital optical signal to an upper-level device connected to the optical splitter.

For example, in this embodiment of the present invention, each optical interface in N (N≥1) downlink optical interfaces of the optical splitter 22 shown in FIG. 3 is connected to one PHY processing entity in the at least one PHY processing entity, so that the optical splitter can receive, by using the N downlink optical interfaces of the optical splitter, the second uplink data that is in a form of a digital optical signal and that is sent by each PHY processing entity, aggregates the second uplink data that is in a form of a digital optical signal and that is sent by each PHY processing entity, and then sends the second uplink data in a form of a digital optical signal to the optical access device 20. There are N PHY processing entities in the optical access system.

For other descriptions of the optical splitter, refer to related descriptions of the optical splitter in the foregoing embodiment (in the process of transmitting downlink data in the optical access system). Details are not described herein.

It should be noted that, in this embodiment of the present invention, for other descriptions of the optical access system in the process of transmitting uplink data, refer to the foregoing related descriptions of the optical access system in the process of transmitting downlink data, and details are not described herein.

The embodiments of the present invention provide an optical access device. The optical access device (the optical access device is usually located at a central office) may transmit uplink data and downlink data. Specifically, in a downlink data transmission process, the optical access device may receive downlink data (for example, video data) sent by a device in an optical network, process the downlink data to obtain downlink data in a form of a digital optical signal, send the downlink data in a form of a digital optical signal to a PHY processing entity located at a remote end, convert the downlink data in a form of a digital optical signal into the downlink data in a form of an analog electrical signal by using the PHY processing entity, and send the downlink data in a form of an analog electrical signal to a terminal device by using a CM, so as to implement downlink data transmission. In an uplink data transmission process, the optical access device may receive uplink data (for example, request data of the terminal device, where the uplink data is in a form of a digital optical signal) sent by the terminal device by using the CM and the PHY processing entity, convert the uplink data in a form of a digital optical signal into the uplink data in a form of a digital electrical signal, process the uplink data in a form of a digital electrical signal, and send the uplink data in a form of a digital electrical signal to a device in the optical network, or send the uplink data in a form of a digital electrical signal to a device in the optical network in a form of a digital optical signal, so as to implement uplink data transmission. The optical access device provided in the embodiments of the present invention is described in detail below by using downlink data transmission and uplink data transmission as an example.

First, the optical access device provided in the embodiments of the present invention is described for illustration purposes by using an example in which the downlink data is transmitted in the optical access device.

FIG. 4 is a schematic structural diagram of an optical access device according to an embodiment of the present invention. The optical access device includes a switching control unit 30, and an uplink processing unit 31 and a MAC resource processing unit 32 that are connected to the switching control unit 30.

The uplink processing unit 31 is configured to: receive downlink data (for example, first downlink data) sent by a device (for example, a switch or a router) in an optical network, and send the first downlink data to the switching control unit 30.

The switching control unit 30 is configured to: receive the first downlink data sent by the uplink processing unit 31, send the first downlink data to the MAC resource processing unit 32, and receive second downlink data that is in a form of a digital electrical signal and that is sent by the MAC resource processing unit 32.

The MAC resource processing unit 32 is configured to: receive the first downlink data sent by the switching control unit 30, perform first processing on the first downlink data at a MAC layer, in other words, process the first downlink data at the MAC layer, to obtain the second downlink data in a form of a digital electrical signal, and send the second downlink data in a form of a digital electrical signal to the switching control unit 30.

In this embodiment of the present invention, the uplink processing unit 31 shown in FIG. 4 may be an interface board connected to a device (for example, a switch or a router) in the optical network. The uplink processing unit 31 may receive the first downlink data sent by the switch or the router in the optical network. The first downlink data may be downlink data in a form of a digital electrical signal, or may be downlink data in a form of a digital optical signal. In a process of processing the first downlink data in each unit of the optical access device, each unit of the optical access device can process the downlink data in a form of a digital electrical signal, but cannot process the downlink data in a form of a digital optical signal. Therefore, when the first downlink data received by the uplink processing unit 31 is the downlink data in a form of a digital optical signal, the uplink processing unit 31 may convert the first downlink data in a form of a digital optical signal into the first downlink data in a form of a digital electrical signal, and then send the converted first downlink data in a form of a digital electrical signal to the switching control unit 30.

Optionally, in this embodiment of the present invention, the uplink processing unit may be further configured to convert a bit rate of downlink data (the downlink data is video data) received by the uplink processing unit, to be specific, the uplink processing unit may convert the bit rate of the downlink data received by the uplink processing unit into a bit rate required by the optical access device. For example, if the bit rate of the downlink data received by the uplink processing unit is 10.3125 gigabits per second (Gbit/s), and the bit rate required by the optical access device is 12.5 Gbit/s, the uplink processing unit may convert the bit rate of the downlink data into 12.5 Gbit/s.

Optionally, in this embodiment of the present invention, the uplink processing unit may be further configured to convert an encoding format of a level of downlink data (the downlink data is in a form of an electrical signal) received by the uplink processing unit, in other words, the uplink processing unit may convert the encoding format of the level of the downlink data received by the uplink processing unit into an encoding format of a level that can be processed by the optical access device. For example, the downlink data received by the uplink processing unit may be converted from a gigabit Ethernet (Gigabit Ethernet, GE) encoding format to a non-return to zero (non-return to zero, NRZ) encoding format.

In this embodiment of the present invention, the switching control unit 30 may be configured to exchange data between units in the optical access device. For example, the switching control unit 30 may receive the first downlink data sent by the uplink processing unit 31, send the first downlink data to the MAC resource processing unit 32, then receive the second downlink data that is in a form of a digital electrical signal and that is processed by the MAC resource processing unit 32, and send the second downlink data in a form of a digital electrical signal to an interface unit in the optical access device.

Optionally, in this embodiment of the present invention, the switching control unit 30 may be further configured to control another unit (for example, the uplink processing unit 31 and the MAC resource processing unit 32) in the optical access device. Specifically, the switching control unit 30 may monitor a status of each unit of the optical access device (for example, whether a connection between the units is abnormal, and whether running of each unit is normal), and control and manage each unit based on the status of each unit of the optical access device.

In this embodiment of the present invention, that the MAC resource processing unit performs first processing on the first downlink data at the MAC layer may include: packet splitting and encapsulating of the first downlink data.

For a specific process in which the MAC resource processing unit performs the first processing on the first downlink data at the MAC layer, refer to the related descriptions of performing first processing on the first downlink data at the MAC layer of the optical access device by the optical access device in the optical access system, and details are not described herein.

Optionally, in this embodiment of the present invention, there may be at least one MAC resource processing unit in the optical access device. For example, one MAC resource processing unit (briefly referred to as a first MAC resource processing unit below, for example, the MAC resource processing unit 32 shown in FIG. 4) is used as an example. After the first MAC resource processing unit performs first processing on the first downlink data at the MAC layer to obtain the second downlink data in a form of a digital electrical signal, the first MAC resource processing unit may send the second downlink data in a form of a digital electrical signal to a switching control unit connected to the first MAC resource processing unit. The first MAC resource processing unit may also store the second downlink data in a form of a digital electrical signal in the first MAC resource processing unit (specifically, the second downlink data may be stored in a storage module of the first MAC resource processing unit). In this way, when an error (for example, a loss) occurs in the second downlink data, the stored second downlink data (the second downlink data in a form of a digital electrical signal) may be read again in the first MAC resource processing unit, thereby avoiding a problem that transmission of the second downlink data fails because an error occurs in the second downlink data.

Further, each MAC resource processing unit in the at least one MAC resource processing unit is connected to a switching control unit. In addition, each MAC resource processing unit has the same function as the MAC resource processing unit 32 shown in FIG. 4. For a detailed description of the at least one MAC resource processing unit, refer to the related descriptions of the MAC resource processing unit 32 shown in FIG. 4. For example, one MAC resource processing unit (for example, the first MAC resource processing unit) in the at least one MAC resource processing unit may store, in the first MAC resource processing unit, the second downlink data that is in a form of a digital electrical signal and that is obtained through processing at the MAC layer of the MAC resource processing unit. Each MAC resource processing unit in other MAC resource processing units (namely, MAC resource processing units other than the first MAC resource processing unit in the at least one MAC resource processing unit) in the at least one MAC resource processing unit may also store, in each MAC resource processing unit, the second downlink data that is in a form of a digital electrical signal and that is obtained through processing at the MAC layer of the MAC resource processing unit (specifically, the second downlink data may be stored in a storage module of each MAC resource processing unit). In this way, when the first MAC resource processing unit is faulty and cannot process and transmit data, a data transmission service may be switched to any normal MAC resource processing unit in other MAC resource processing units, thereby avoiding a problem that second downlink data transmission fails because the first MAC resource processing unit is faulty.

It may be understood that, in this embodiment of the present invention, each MAC resource processing unit in the at least one MAC resource processing unit may be connected to a switching control unit through different interfaces on the switching control unit.

It should be noted that, in this embodiment of the present invention, a quantity of MAC resource processing units in the optical access device may be determined based on an actual use requirement. This is not specifically limited in this embodiment of the present invention.

According to the optical access device provided in this embodiment of the present invention, the uplink processing unit in the optical access device may receive the first downlink data, and send the first downlink data to the switching control unit. After receiving the first downlink data sent by the uplink processing unit, the switching control unit sends the first downlink data to the MAC resource processing unit. The MAC resource processing unit receives the first downlink data sent by the switching control unit, performs first processing on the first downlink data at the MAC layer to obtain the second downlink data in a form of a digital electrical signal, and sends the second downlink data in a form of a digital electrical signal to the switching control unit. Compared with the prior art, in this embodiment of the present invention, a MAC resource processing unit may be disposed in an optical access device located at a central office, so that processing (namely, the foregoing first processing) of downlink data (namely, the first downlink data) in the optical network at the MAC layer can be implemented in the optical access device. Therefore, there is no need to integrate functions of the MAC layer in a device on a remote side, so that the device on a remote side can reduce power consumption brought by processing the first downlink data at the MAC layer to some extent according to this embodiment of the present invention, in other words, the optical access device provided in this embodiment of the present invention can reduce power consumption of the device on a remote side.

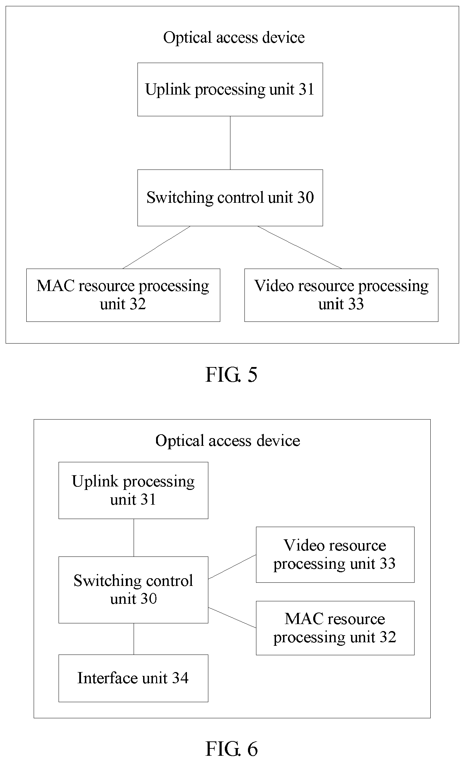

Optionally, with reference to FIG. 4, as shown in FIG. 5, the optical access device provided in the embodiments of the present invention may further include a video resource processing unit 33 connected to the switching control unit 30. When downlink data (for example, first downlink data) sent by a device in an optical network is video data, the video resource processing unit 33 is configured to process the video data.

An uplink processing unit 31 shown in FIG. 5 is specifically configured to: receive the video data (namely, the first downlink data) sent by the device in the optical network, and send the video data to the switching control unit 30.

The switching control unit 30 is specifically configured to: receive the video data sent by the uplink processing unit 31, send the video data to the video resource processing unit 33, receive the video data that is processed by the video resource processing unit 33 and that is sent by the video resource processing unit 33, send the processed video data to a MAC resource processing unit 32, and receive second downlink data (namely, downlink data that is in a form of a digital electrical signal and that is processed by the MAC resource processing unit 32 at a MAC layer) that is in a form of a digital electrical signal and that is sent by the MAC resource processing unit 32.

The video resource processing unit 33 is configured to: receive the video data sent by the switching control unit, perform second processing on the video data, and send the processed video data to the switching control unit 30.

The MAC resource processing unit 32 is specifically configured to: receive the video data that is processed by the video resource processing unit 33 and that is sent by the switching control unit 30, perform first processing on the processed video data at the MAC layer to obtain the second downlink data in a form of a digital electrical signal, and send the second downlink data in a form of a digital electrical signal to the switching control unit 30.

It should be noted that, in this embodiment (the optical access device shown in FIG. 5), that the video resource processing unit performs second processing on video data received by the video resource processing unit may be understood as follows: The video resource processing unit performs video processing on the video data. To distinguish the second processing (namely, video processing) herein from the second processing performed by the PHY processing entity in the optical access system on the received second downlink data in a form of a digital optical signal at the PHY layer of the PHY processing entity in the foregoing embodiment (the optical access system shown in FIG. 2 or FIG. 3), the second processing herein, namely, the video processing, may be referred to as third processing. The video processing or the third processing is used to represent the second processing in the video resource processing unit in the following embodiments.

In this embodiment of the present invention, for a specific description of the uplink processing unit, refer to the related descriptions of the uplink processing unit in the foregoing embodiments, and details are not described herein.

For a specific description of the switching control unit, refer to the related descriptions of the switching control unit in the foregoing embodiments, and details are not described herein.

Optionally, in this embodiment of the present invention, the video processing may include reassembling video data, encrypting video data, and the like.

For example, in this embodiment of the present invention, that the video resource processing unit performs video processing on video data received by the video resource processing unit may include reassembling video data, encrypting video data, and the like. Generally, the video data received by the video resource processing unit may include a plurality of types of video data. The video resource processing unit may screen at least one type of video data (namely, video data requested by a terminal device, referred to as requested video data below) from the plurality of types of video data, encrypt the requested video data to obtain encrypted requested video data, namely, the foregoing processed video data, and then send the processed video data to the switching control unit.

For example, it is assumed that the video data received by the video resource processing unit includes video data provided on a frequency band 1 to a frequency band 12 of a television broadcast station, and video data requested by the terminal device (there may be a plurality of terminal devices) includes video data provided on the frequency band 1, the frequency band 3, the frequency band 5, and the frequency band 8 of the television broadcast station. In this case, the video resource processing unit may screen, from the video data provided on the frequency band 1 to the frequency band 12 received by video resource processing unit, the video data requested by the terminal device, in other words, the video resource processing unit may screen the video data provided on the frequency band 1, the frequency band 3, the frequency band 5, and the frequency band 8 of the local television broadcast station, so as to obtain the requested video data.

In this embodiment of the present invention, the video resource processing unit may encrypt the requested video data by using a data encryption algorithm, to obtain processed video data, and then send the processed video data to the switching control unit, so as to send the processed video data to a CM by using another device (for example, the PHY processing entity) in the optical access system. After receiving the processed video data, the CM may decrypt the processed video data by using a data decryption algorithm agreed with the optical access device, so as to obtain the video data before encryption, namely, the video data requested by the terminal device.

In this embodiment of the present invention, in a video data transmission process, the video resource processing unit in the optical access device may encrypt video data, and the CM may decrypt the video data. Setting an encryption and decryption mechanism may prevent video data from being tampered in a transmission process, so that video data is securely transmitted. Further, after the video data is encrypted, a terminal device that requests the video data and has paid for the video data can decrypt the video data based on an agreed decryption algorithm, so as to obtain the video data.

Optionally, in this embodiment of the present invention, there may be at least one video resource processing unit in the optical access device. For example, one video resource processing unit (briefly referred to as a first video resource processing unit below, for example, the video resource processing unit 33 shown in FIG. 5) is used as an example. After the first video resource processing unit performs video processing on the video data (namely, the first downlink data) to obtain the processed video data, the first video resource processing unit may send the processed video data to a switching control unit connected to the first video resource processing unit. The first video resource processing unit may further store the processed video data in the first video resource processing unit (specifically, the processed video data may be stored in a storage module of the first video resource processing unit). In this way, when an error (for example, a loss) occurs in the processed video data, the stored processed video data may be read again in the first video resource processing unit, thereby avoiding a problem that the processed video data fails to be transmitted because an error occurs in the processed video data.

Further, each video resource processing unit in the at least one video resource processing unit is connected to a switching control unit. In addition, each video resource processing unit has the same function as the video resource processing unit 33 shown in FIG. 5. For a detailed description of the at least one video resource processing unit, refer to the related descriptions of the video resource processing unit 33 shown in FIG. 5. For example, one video resource processing unit (for example, the first video resource processing unit) in the at least one video resource processing unit may store, in the first video resource processing unit, processed video data performed by the video resource processing unit. Each video resource processing unit in other video resource processing units (namely, video resource processing units other than the first video resource processing unit in the at least one video resource processing unit) in the at least one video resource processing unit may also store, in each video resource processing unit, processed video data performed by each video resource processing unit (specifically, the processed video data may be stored in a storage module of each video resource processing unit). Therefore, when the first video resource processing unit is faulty and cannot process and transmit data, a video data transmission service may be switched to any normal video resource processing unit in the other video resource processing units, thereby avoiding a problem that the processed video data fails to be transmitted because the first video resource processing unit is faulty.

It may be understood that, in this embodiment of the present invention, each video resource processing unit in the at least one video resource processing unit may be connected to a switching control unit through different interfaces on the switching control unit.

It should be noted that, in this embodiment of the present invention, a quantity of video resource processing units in the optical access device may be specifically determined based on an actual use requirement. This is not specifically limited in this embodiment of the present invention.

With reference to FIG. 5, as shown in FIG. 6, the optical access device provided in the embodiments of the present invention may further include an interface unit 34 connected to the switching control unit 30.

The switching control unit 30 is specifically configured to send the second downlink data in a form of a digital electrical signal to the interface unit 34. The interface unit 34 is configured to: receive the second downlink data that is in a form of a digital electrical signal and that is sent by the switching control unit 30, convert the second downlink data in a form of a digital electrical signal into the second downlink data in a form of a digital optical signal, and send the second downlink data in a form of a digital optical signal to a PHY processing entity located at a remote end.

In this embodiment of the present invention, in a process in which each unit (for example, a switching control unit, a video resource processing unit, and a MAC resource processing unit) inside the optical access device processes and exchanges downlink data, the downlink data is in a form of a digital electrical signal. After each unit in the optical access device completes downlink data processing, the interface unit in the optical access device may convert the second downlink data that is in a form of a digital electrical signal and that is sent by the switching control unit in the optical access device into the second downlink data in a form of a digital optical signal, where the second downlink data in a form of a digital electrical signal is obtained through processing performed by the video resource processing unit and the MAC resource processing unit, so as to send the second downlink data in a form of a digital optical signal to at least one PHY processing entity located at a remote end.

Optionally, in this embodiment of the present invention, the interface unit may include at least one of a point-to-multipoint passive optical network (Passive Optical Network, PON) interface board and a point-to-point (point-to-point, P2P) interface board. Specifically, the interface unit in this embodiment of the present invention may be selected based on an actual use requirement. This is not limited in this embodiment of the present invention.

It should be noted that, in the optical access device provided in this embodiment of the present invention, the uplink processing unit 31 and the switching control unit 30 shown in FIG. 4 may be two independent units. Alternatively, the uplink processing unit 31 and the switching control unit 30 shown in FIG. 4 may be one integration unit, in other words, a function of the uplink processing unit 31 and a function of the switching control unit 30 may be integrated into one unit. Specifically, selection may be performed based on an actual use requirement. This is not limited in this embodiment of the present invention.

It should be noted that, in this embodiment of the present invention, the units (for example, the uplink processing unit, the video resource processing unit, the MAC resource processing unit, and the interface unit) in the foregoing optical access device cannot directly interact, in other words, any two units in the units cannot directly transmit data, and therefore, data is transmitted between any two units in the units by using a switching control unit. For example, if one unit exchanges data with another unit, the unit may send the data to the switching control unit, and the switching control unit forwards the data to the another unit.

Further, the optical access device provided in the embodiments of the present invention is described below for illustration purposes by using an example in which the uplink data is transmitted in the optical access device.

FIG. 4 is a schematic structural diagram of an optical access device according to an embodiment of the present invention. The optical access device includes a switching control unit 30, and an uplink processing unit 31 and a MAC resource processing unit 32 that are connected to the switching control unit.

The switching control unit 30 is configured to: receive uplink data (referred to as first uplink data below), send the first uplink data to the MAC resource processing unit 32, receive second uplink data that is in a form of a digital electrical signal and that is sent by the MAC resource processing unit 32, and send the second uplink data in a form of a digital electrical signal to the uplink processing unit 31.

The MAC resource processing unit 32 is configured to: receive the first uplink data sent by the switching control unit 30, process the first uplink data at a MAC layer to obtain the second uplink data in a form of a digital electrical signal, and send the second uplink data in a form of a digital electrical signal to the switching control unit 30.

The uplink processing unit 31 is configured to: receive the second uplink data that is in a form of a digital electrical signal and that is sent by the switching control unit, and send the second uplink data in a form of a digital electrical signal to a device (for example, a switch or a router) in an optical network, or send the second uplink data in a form of a digital electrical signal to a device in an optical network in a form of a digital optical signal.

In this embodiment of the present invention, the first uplink data may be request data, and the request data may include Internet access authentication data of a terminal device and video request data of the terminal device. Processing the first uplink data at the MAC layer may include decapsulating the first uplink data. For example, the first uplink data may be decapsulated according to the Ethernet protocol, to obtain the second uplink data in a form of a digital electrical signal.

In this embodiment of the present invention, the uplink processing unit may directly send, to a device in the optical network, the second uplink data that is in a form of a digital electrical signal and that is received by the uplink processing unit. Alternatively, the uplink processing unit may convert the second uplink data that is in a form of a digital electrical signal and that is received by the uplink processing unit into the second uplink data in a form of a digital optical signal, and then send the second uplink data in a form of a digital optical signal to a device in the optical network.

As shown in FIG. 6, the optical access device provided in the embodiments of the present invention may further include an interface unit 34 connected to the switching control unit 30. The interface unit 34 is configured to: receive first uplink data in a form of a digital optical signal, convert the first uplink data in a form of a digital optical signal into the first uplink data in a form of a digital electrical signal, and send the first uplink data in a form of a digital signal to the switching control unit 30.

In this embodiment of the present invention, the interface unit may receive uplink data (namely, the first uplink data in a form of a digital optical signal) that is in a form of a digital optical signal and that is sent by a PHY processing entity located at a remote end in an optical access system, and convert the first uplink data in a form of a digital optical signal into the uplink data in a form of a digital electrical signal, and send the first uplink data in a form of a digital electrical signal to the switching control unit, so that units (for example, the switching control unit and the MAC resource processing unit) in the optical access device can process and exchange the first uplink data in a form of a digital electrical signal.

It should be noted that, in this embodiment of the present invention, for other descriptions of the optical access device in the process of transmitting uplink data, refer to the foregoing related descriptions of the optical access device in the process of transmitting downlink data, and details are not described herein.

According to the optical access device provided in this embodiment of the present invention, the switching control unit in the optical access device may receive the first uplink data, and send the first uplink data to the MAC resource processing unit. The MAC resource processing unit receives the first uplink data sent by the switching control unit, processes the first uplink data at a MAC layer to obtain second uplink data in a form of a digital electrical signal, and sends the second uplink data in a form of a digital electrical signal to the switching control unit. After the switching control unit receives the second uplink data that is in a form of a digital electrical signal and that is sent by the MAC resource processing unit, the switching control unit sends the second uplink data in a form of a digital electrical signal to the uplink processing unit. After receiving the second uplink data that is in a form of a digital electrical signal and that is sent by the switching control unit, the uplink processing unit may send the second uplink data in a form of a digital electrical signal to a device in an optical network, or send the second uplink data in a form of a digital electrical signal to a device in an optical network in a form of a digital optical signal. Compared with the prior art, in this embodiment of the present invention, the MAC resource processing unit may be disposed in the optical access device located at a central office, so that processing of uplink data (namely, the first uplink data) in the optical network at the MAC layer can be implemented in the optical access device. Therefore, there is no need to integrate functions of the MAC layer in a device on a remote side, so that the device on a remote side can reduce power consumption brought by processing the first uplink data at the MAC layer to some extent according to this embodiment of the present invention, in other words, the optical access device provided in this embodiment of the present invention can reduce power consumption of the device on a remote side.

The optical access device provided in the embodiments of the present invention (namely, the foregoing optical access device shown in FIG. 4, FIG. 5, or FIG. 6) may be applied to the optical access system provided in the embodiments of the present invention. For a specific description of the optical access system, refer to the related descriptions of the optical access system (namely, the optical access system shown in FIG. 2 or FIG. 3) in the foregoing embodiments.

The embodiments of the present invention provide a data processing method, and the method may be applied to an optical access device. For example, the method may be applied to a process in which the optical access device processes downlink data and the optical access device processes uplink data. Specifically, in the process in which the optical access device processes the downlink data, the optical access device may receive the downlink data, process the downlink data to obtain downlink data in a form of a digital electrical signal, convert the downlink data in a form of a digital electrical signal into the downlink data in a form of a digital optical signal, and send the downlink data in a form of a digital optical signal to at least one PHY processing entity, so as to complete downlink data processing. In the process in which the optical access device processes the uplink data, the optical access device may receive the uplink data, process the uplink data to obtain uplink data in a form of a digital electrical signal, and send the uplink data in a form of a digital electrical signal to a device (for example, a switch or a router) in an optical network, or send the uplink data in a form of a digital electrical signal to a device in an optical network in a form of a digital optical signal, so as to complete uplink data processing. The data processing method provided in the embodiments of the present invention is described below in detail by using an example in which the optical access device processes the downlink data and processes the uplink data.

First, the data processing method provided in the embodiments of the present invention is described for illustration purposes by using an example in which the optical access device processes the downlink data.

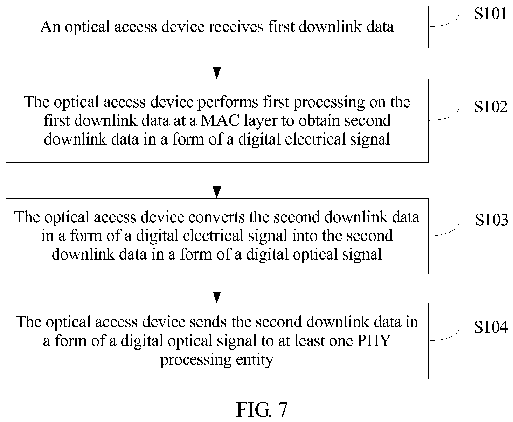

As shown in FIG. 7, an embodiment of the present invention provides a data processing method. The method may include S101 to S104.

S101. An optical access device receives first downlink data.

S102. The optical access device performs first processing on the first downlink data at a MAC layer to obtain second downlink data in a form of a digital electrical signal.

S103. The optical access device converts the second downlink data in a form of a digital electrical signal into the second downlink data in a form of a digital optical signal.

S104. The optical access device sends the second downlink data in a form of a digital optical signal to at least one PHY processing entity.

In this embodiment of the present invention, the optical access device may receive the first downlink data by using an uplink processing unit of the optical access device, perform first processing on the first downlink data at the MAC layer of a MAC resource processing unit in the optical access device, to obtain the second downlink data in a form of a digital electrical signal, and convert the second downlink data in a form of a digital electrical signal into the second downlink data in a form of a digital optical signal in an interface unit of the optical access device.

When the optical access device performs S101 to S104, a specific process may be implemented by each functional unit in the optical access device. For a specific description of S101 to S104, refer to the related descriptions of transmitting downlink data by the optical access device (the optical access device shown in FIG. 4 to FIG. 6) in the foregoing embodiments. Details are not described herein.

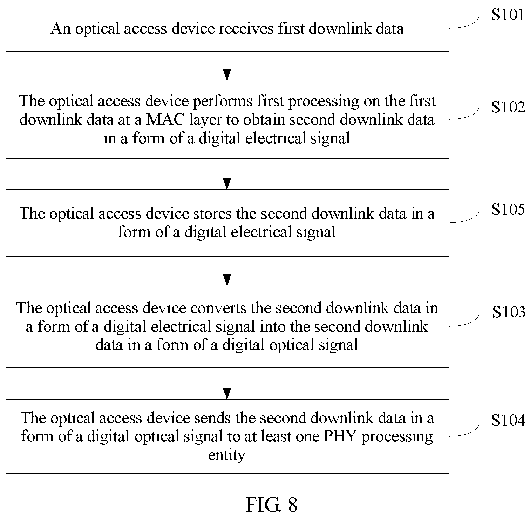

Optionally, with reference to FIG. 7, as shown in FIG. 8, after S102, the data processing method provided in this embodiment of the present invention may further include S105.

S105. The optical access device stores the second downlink data in a form of a digital electrical signal.

It should be noted that a sequence of performing S105 and S103 may be not limited in this embodiment of the present invention. In other words, in this embodiment of the present invention, S105 may be performed before S103; or S103 may be performed before S105; or S105 and S103 may be simultaneously performed.

For a specific description of S105, refer to the related description of storing the second downlink data in a form of a digital electrical signal in the optical access device (specifically, the MAC resource processing unit in the optical access device) in the foregoing embodiment. Details are not described herein.

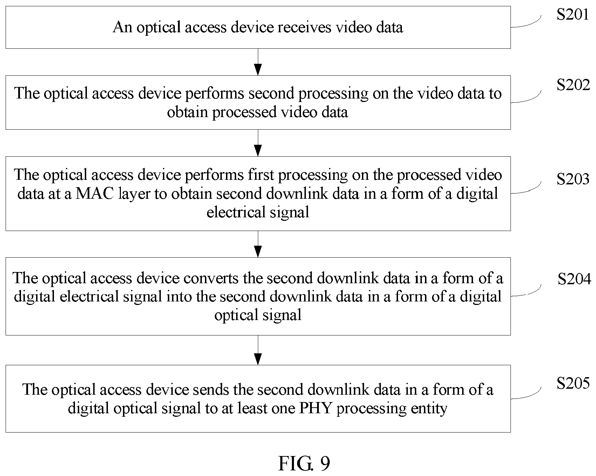

Optionally, with reference to FIG. 6, as shown in FIG. 9, in this embodiment of the present invention, when the first downlink data is video data, S101 to S104 may be specifically replaced with S201 to S205.

S201. An optical access device receives the video data.

S202. The optical access device performs second processing on the video data to obtain processed video data.

S203. The optical access device performs first processing on the processed video data at a MAC layer to obtain second downlink data in a form of a digital electrical signal.

S204. The optical access device converts the second downlink data in a form of a digital electrical signal into the second downlink data in a form of a digital optical signal.

S205. The optical access device sends the second downlink data in a form of a digital optical signal to at least one PHY processing entity.

In this embodiment of the present invention, second processing may be performed on the video data in a video resource processing unit of the optical access device to obtain the processed video data.

When the optical access device performs S201 to S205, a specific process may be implemented by each functional unit in the optical access device. For a specific description of S201 to S205, refer to the related descriptions of transmitting downlink data by the optical access device (the optical access device shown in FIG. 4 to FIG. 6) in the foregoing embodiments. Details are not described herein.

Optionally, with reference to FIG. 9, after S202, the data processing method provided in this embodiment of the present invention may further include S206.

S206. The optical access device stores the processed video data.

It should be noted that a sequence of performing S206 and S202 may be not limited in this embodiment of the present invention. In other words, in this embodiment of the present invention, S206 may be performed before S202; or S202 may be performed before S206; or S206 and S202 may be simultaneously performed.

For a specific description of S206, refer to the related description of storing the processed video data in the optical access device (specifically, the video resource processing unit in the optical access device) in the foregoing embodiment. Details are not described herein.

According to the data processing method provided in this embodiment of the present invention, the optical access device may receive the first downlink data, perform first processing on the first downlink data at the MAC layer of the optical access device to obtain the second downlink data in a form of a digital electrical signal, convert the second downlink data in a form of a digital electrical signal into the second downlink data in a form of a digital optical signal, and send the second downlink data in a form of a digital optical signal to the at least one PHY processing entity. Compared with the prior art, in this embodiment of the present invention, processing (namely, the first processing) of the downlink data (namely, the first downlink data) in an optical network may be performed at the MAC layer in the optical access device located at a central office. Therefore, there is no need to integrate functions of the MAC layer in a device on a remote side, so that the device on a remote side can reduce power consumption brought by processing the first downlink data at the MAC layer to some extent according to this embodiment of the present invention, in other words, the optical access device provided in this embodiment of the present invention can reduce power consumption of the device on a remote side.

Further, the data processing method provided in the embodiments of the present invention is described below for illustration purposes by using an example in which the optical access device processes the uplink data.

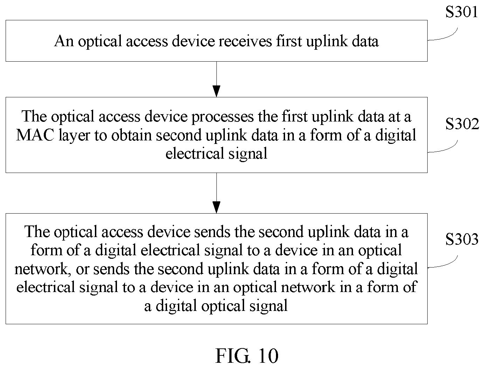

As shown in FIG. 10, an embodiment of the present invention provides a data processing method. The method may include S301 to S304.

S301. An optical access device receives first uplink data.

S302. The optical access device processes the first uplink data at a MAC layer to obtain second uplink data in a form of a digital electrical signal.

S303. The optical access device sends the second uplink data in a form of a digital electrical signal to a device in an optical network, or sends the second uplink data in a form of a digital electrical signal to a device in an optical network in a form of a digital optical signal.

In this embodiment of the present invention, S301 to S303 performed by the optical access device are implemented by functional units in the optical access device. For specific descriptions of S301 to S303, refer to the related descriptions of transmitting the uplink data by the optical access device in the foregoing embodiment, and details are not described herein.

According to the data processing method provided in this embodiment of the present invention, the optical access device may receive the first uplink data, process the first uplink data at the MAC layer of the optical access device to obtain the second uplink data in a form of a digital electrical signal, and send the second uplink data in a form of a digital electrical signal to a device in the optical network or send the second uplink data in a form of a digital electrical signal to a device in the optical network in a form of a digital optical signal. Compared with the prior art, in this embodiment of the present invention, the uplink data (namely, the first uplink data) in the optical network may be processed at the MAC layer in the optical access device located at a central office. Therefore, there is no need to integrate functions of the MAC layer in a device on a remote side, so that the device on a remote side can reduce power consumption brought by processing the first uplink data at the MAC layer to some extent according to this embodiment of the present invention, in other words, the optical access device provided in this embodiment of the present invention can reduce power consumption of the device on a remote side.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the appended claims.

## Claims

1. An optical access system, comprising: an optical access device (20) and at least one physical, PHY, processing entity (21) connected to the optical access device, wherein
the optical access device is configured to: receive first downlink data, perform first processing on the first downlink data at a media access control, MAC, layer in the optical access device to obtain second downlink data in a form of a digital electrical signal, and send, in a form of a digital optical signal, the second downlink data in a form of a digital electrical signal to the at least one PHY processing entity; and
each PHY processing entity in the at least one PHY processing entity is configured to: receive the second downlink data that is in a form of a digital optical signal and that is sent by the optical access device, perform second processing on the second downlink data in a form of a digital optical signal at a PHY layer to obtain third downlink data in a form of an analog electrical signal, and send the third downlink data in a form of an analog electrical signal to a cable modem, CM;
wherein the optical access device comprises a switching control unit (30), and an uplink processing unit (31) and a MAC resource processing unit (32) that are connected to the switching control unit, wherein
the uplink processing unit is configured to: receive the first downlink data, and send the first downlink data to the switching control unit;
the switching control unit is configured to: receive the first downlink data sent by the uplink processing unit, send the first downlink data to the MAC resource processing unit, receive the second downlink data that is in a form of a digital electrical signal and that is sent by the MAC resource processing unit, and send, in a form of a digital optical signal, the second downlink data in a form of a digital electrical signal to the at least one PHY processing entity; and
the MAC resource processing unit is configured to: receive the first downlink data sent by the switching control unit, perform first processing on the first downlink data at the MAC layer to obtain the second downlink data in a form of a digital electrical signal, and send the second downlink data in a form of a digital electrical signal to the switching control unit;
wherein the optical access device further comprises a video resource processing unit (33) connected to the switching control unit, and the first downlink data is video data;
the switching control unit is specifically configured to: receive the video data sent by the uplink processing unit, send the video data to the video resource processing unit, receive the video data that is processed and sent by the video resource processing unit, send the processed video data to the MAC resource processing unit, and receive the second downlink data that is in a form of a digital electrical signal and that is sent by the MAC resource processing unit;
the video resource processing unit is configured to: receive the video data sent by the switching control unit, perform third processing on the video data to obtain processed video data, and send the processed video data to the switching control unit; and
the MAC resource processing unit is specifically configured to: receive the processed video data sent by the switching control unit, perform first processing on the processed video data at the MAC layer to obtain the second downlink data in a form of a digital electrical signal, and send the second downlink data in a form of a digital electrical signal to the switching control unit.

2. The optical access system according to claim 1, wherein the optical access system further comprises an optical splitter (22), and the optical access device is connected to each PHY processing entity by using the optical splitter; and
the optical access device is specifically configured to send, by using the optical splitter, the second downlink data in a form of a digital optical signal to each PHY processing entity.

3. The optical access system according to claim 1, wherein
the MAC resource processing unit is further configured to store the second downlink data in a form of a digital electrical signal.

4. The optical access system according to any one of claims 1 to 3, wherein
the video resource processing unit is further configured to store the processed video data.

5. The optical access system according to any one of claims 1 to 4, wherein the optical access device further comprises an interface unit (34) connected to the switching control unit;
the switching control unit is specifically configured to send the second downlink data in a form of a digital electrical signal to the interface unit; and
the interface unit is configured to: receive the second downlink data that is in a form of a digital electrical signal and that is sent by the switching control unit, convert the second downlink data in a form of a digital electrical signal into the second downlink data in a form of a digital optical signal, and send the second downlink data in a form of a digital optical signal to the at least one PHY processing entity.

6. An optical access device, comprising: a switching control unit (30), and an uplink processing unit (31) and a media access control MAC resource processing unit (32) that are connected to the switching control unit, wherein
the uplink processing unit is configured to: receive first downlink data, and send the first downlink data to the switching control unit;
the switching control unit is configured to: receive the first downlink data sent by the uplink processing unit, send the first downlink data to the MAC resource processing unit, and receive second downlink data that is in a form of a digital electrical signal and that is sent by the MAC resource processing unit; and
the MAC resource processing unit is configured to: receive the first downlink data sent by the switching control unit, perform first processing on the first downlink data at a MAC layer to obtain the second downlink data in a form of a digital electrical signal, and send the second downlink data in a form of a digital electrical signal to the switching control unit;
wherein the optical access device further comprises a video resource processing unit (33) connected to the switching control unit, and the first downlink data is video data;
the switching control unit is specifically configured to: receive the video data sent by the uplink processing unit, send the video data to the video resource processing unit, receive the video data that is processed and sent by the video resource processing unit, send the processed video data to the MAC resource processing unit, and receive the second downlink data that is in a form of a digital electrical signal and that is sent by the MAC resource processing unit;
the video resource processing unit is configured to: receive the video data sent by the switching control unit, perform second processing on the video data to obtain processed video data, and send the processed video data to the switching control unit; and
the MAC resource processing unit is specifically configured to: receive the processed video data sent by the switching control unit, perform first processing on the processed video data at the MAC layer to obtain the second downlink data in a form of a digital electrical signal, and send the second downlink data in a form of a digital electrical signal to the switching control unit.

7. The optical access device according to claim 6, wherein
the MAC resource processing unit is further configured to store the second downlink data in a form of a digital electrical signal.

8. The optical access device according to claim 6 or 7, wherein
the video resource processing unit is further configured to store the processed video data.

9. The optical access device according to any one of claims 6 to 8, wherein the optical access device further comprises an interface unit connected to the switching control unit;
the switching control unit is specifically configured to send the second downlink data in a form of a digital electrical signal to the interface unit; and
the interface unit is configured to: receive the second downlink data that is in a form of a digital electrical signal and that is sent by the switching control unit, convert the second downlink data in a form of a digital electrical signal into the second downlink data in a form of a digital optical signal, and send the second downlink data in a form of a digital optical signal to a physical PHY processing entity.

10. A data processing method, comprising:
Receiving (S 101), by an optical access device, first downlink data;
Performing (S102), by the optical access device, first processing on the first downlink data at a media access control, MAC, layer to obtain second downlink data in a form of a digital electrical signal;
Converting (SI03), by the optical access device, the second downlink data in a form of a digital electrical signal into the second downlink data in a form of a digital optical signal; and
Sending (S104), by the optical access device, the second downlink data in a form of a digital optical signal to at least one physical, PHY, processing entity;
wherein the first downlink data is video data;
before the performing, by the optical access device, first processing on the first downlink data at a MAC layer to obtain second downlink data in a form of a digital electrical signal, the method further comprises:
performing (S202), by the optical access device, second processing on the video data to obtain processed video data; and
the performing, by the optical access device, first processing on the first downlink data at a MAC layer to obtain second downlink data in a form of a digital electrical signal comprises:
performing (S204), by the optical access device, the first processing on the processed video data at the MAC layer to obtain the second downlink data in a form of a digital electrical signal.

11. The method according to claim 10, wherein after the performing, by the optical access device, first processing on the first downlink data at a MAC layer to obtain second downlink data in a form of a digital electrical signal, the method further comprises:
storing, by the optical access device, the second downlink data in a form of a digital electrical signal.

## Patentansprüche

1. Optisches Zugangssystem, umfassend: eine optische Zugangsvorrichtung (20) und mindestens eine physische, PHY, Verarbeitungsentität (21), die mit der optischen Zugangsvorrichtung verbunden ist, wobei
die optische Zugangsvorrichtung zu Folgendem konfiguriert ist:
Empfangen von ersten Downlink-Daten, Durchführen einer ersten Verarbeitung an den ersten Downlink-Daten in einer Medienzugangssteuerungsschicht, MAC-Schicht, in der optischen Zugangsvorrichtung, um zweite Downlink-Daten in einer Form eines digitalen elektrischen Signals zu erhalten, und Senden, in einer Form eines digitalen optischen Signals, der zweiten Downlink-Daten in einer Form eines digitalen elektrischen Signals an die mindestens eine PHY-Verarbeitungseinheit; und
jede PHY-Verarbeitungsentität in der mindestens einen PHY-Verarbeitungsentität zu Folgendem konfiguriert ist: Empfangen der zweiten Downlink-Daten, die in einer Form eines digitalen optischen Signals vorliegen und die von der optischen Zugangsvorrichtung gesendet werden, Durchführen einer zweiten Verarbeitung an den zweiten Downlink-Daten in einer Form eines digitalen optischen Signals in einer PHY-Schicht, um dritte Downlink-Daten in einer Form eines analogen elektrischen Signals zu erhalten, und Senden der dritten Downlink-Daten in einer Form eines analogen elektrischen Signals an ein Kabelmodem, CM;
wobei die optische Zugangsvorrichtung eine Schaltsteuereinheit (30) sowie eine Uplink-Verarbeitungseinheit (31) und eine MAC-Ressourcenverarbeitungseinheit (32), die mit der Schaltsteuereinheit verbunden sind, umfasst, wobei die Uplink-Verarbeitungseinheit zu Folgendem konfiguriert ist: Empfangen der ersten Downlink-Daten und Senden der ersten Downlink-Daten an die Schaltsteuereinheit;
wobei die Schaltsteuereinheit zu Folgendem konfiguriert ist: Empfangen der ersten Downlink-Daten, die von der Uplink-Verarbeitungseinheit gesendet werden, Senden der ersten Downlink-Daten an die MAC-Ressourcenverarbeitungseinheit, Empfangen der zweiten Downlink-Daten, die in einer Form eines digitalen elektrischen Signals vorliegen und die von der MAC-Ressourcenverarbeitungseinheit gesendet werden, und Senden, in einer Form eines digitalen optischen Signals, der zweiten Downlink-Daten in einer Form eines digitalen elektrischen Signals an die mindestens eine PHY-Verarbeitungsentität; und
wobei die MAC-Ressourcenverarbeitungseinheit zu Folgendem konfiguriert ist: Empfangen der ersten Downlink-Daten, die von der Schaltsteuereinheit gesendet werden, Durchführen einer ersten Verarbeitung an den ersten Downlink-Daten in der MAC-Schicht, um die zweiten Downlink-Daten in einer Form eines digitalen elektrischen Signals zu erhalten, und Senden der zweiten Downlink-Daten in einer Form eines digitalen elektrischen Signals an die Schaltsteuereinheit;
wobei die optische Zugangsvorrichtung ferner eine Videoressourcenverarbeitungseinheit (33), die mit der Schaltsteuereinheit verbunden ist, umfasst, und wobei es sich bei den ersten Downlink-Daten um Videodaten handelt;
wobei die Schaltsteuereinheit konkret zu Folgendem konfiguriert ist: Empfangen der Videodaten, die von der Uplink-Verarbeitungseinheit gesendet werden, Senden der Videodaten an die Videoressourcenverarbeitungseinheit, Empfangen der Videodaten, die von der Videoressourcenverarbeitungseinheit verarbeitet und gesendet werden, Senden der verarbeiteten Videodaten an die MAC-Ressourcenverarbeitungseinheit und Empfangen der zweiten Downlink-Daten, die in einer Form eines digitalen elektrischen Signals vorliegen und die von der MAC-Ressourcenverarbeitungseinheit gesendet werden;
wobei die Videoressourcenverarbeitungseinheit zu Folgendem konfiguriert ist: Empfangen der Videodaten, die von der Schaltsteuereinheit gesendet werden, Durchführen einer dritten Verarbeitung an den Videodaten, um verarbeitete Videodaten zu erhalten, und Senden der verarbeiteten Videodaten an die Schaltsteuereinheit; und
wobei die MAC-Ressourcenverarbeitungseinheit konkret zu Folgendem konfiguriert ist: Empfangen der verarbeiteten Videodaten, die von der Schaltsteuereinheit gesendet werden, Durchführen einer ersten Verarbeitung an den verarbeiteten Videodaten in der MAC-Schicht, um die zweiten Downlink-Daten in einer Form eines digitalen elektrischen Signals zu erhalten, und Senden der zweiten Downlink-Daten in einer Form eines digitalen elektrischen Signals an die Schaltsteuereinheit.

2. Optisches Zugangssystem nach Anspruch 1, wobei das optische Zugangssystem ferner einen optischen Splitter (22) umfasst und die optische Zugangsvorrichtung unter Verwendung des optischen Splitters mit jeder PHY-Verarbeitungsentität verbunden ist; und die optische Zugangsvorrichtung konkret dazu konfiguriert ist, die zweiten Downlink-Daten in einer Form eines digitalen optischen Signals unter Verwendung des optischen Splitters an jede PHY-Verarbeitungsentität zu senden.

3. Optisches Zugangssystem nach Anspruch 1, wobei die MAC-Ressourcenverarbeitungseinheit ferner dazu konfiguriert ist, die zweiten Downlink-Daten in einer Form eines digitalen elektrischen Signals zu speichern.

4. Optisches Zugangssystem nach einem der Ansprüche 1 bis 3, wobei
die Videoressourcenverarbeitungseinheit ferner dazu konfiguriert ist, die verarbeiteten Videodaten zu speichern.

5. Optisches Zugangssystem nach einem der Ansprüche 1 bis 4, wobei die optische Zugangsvorrichtung ferner eine Schnittstelleneinheit (34), die mit der Schaltsteuereinheit verbunden ist, umfasst;
wobei die Schaltsteuereinheit konkret dazu konfiguriert ist, die zweiten Downlink-Daten in einer Form eines digitalen elektrischen Signals an die Schnittstelleneinheit zu senden; und
wobei die Schnittstelleneinheit zu Folgendem konfiguriert ist: Empfangen der zweiten Downlink-Daten, die in einer Form eines digitalen elektrischen Signals vorliegen und die von der Schaltsteuereinheit gesendet werden, Umwandeln der zweiten Downlink-Daten in einer Form eines digitalen elektrischen Signals in die zweiten Downlink-Daten in einer Form eines digitalen optischen Signals und Senden der zweiten Downlink-Daten in einer Form eines digitalen optischen Signals an die mindestens eine PHY-Verarbeitungsentität.

6. Optische Zugangsvorrichtung, umfassend: eine Schaltsteuereinheit (30) sowie eine Uplink-Verarbeitungseinheit (31) und eine Medienzugangssteuerungs-Ressourcenverarbeitungseinheit, MAC-Ressourcenverarbeitungseinheit, (32), die mit der Schaltsteuereinheit verbunden sind, wobei
die Uplink-Verarbeitungseinheit zu Folgendem konfiguriert ist: Empfangen von ersten Downlink-Daten und Senden der ersten Downlink-Daten an die Schaltsteuereinheit;
wobei die Schaltsteuereinheit zu Folgendem konfiguriert ist: Empfangen der ersten Downlink-Daten, die von der Uplink-Verarbeitungseinheit gesendet werden, Senden der ersten Downlink-Daten an die MAC-Ressourcenverarbeitungseinheit und Empfangen von zweiten Downlink-Daten, die in einer Form eines digitalen elektrischen Signals vorliegen und die von der MAC-Ressourcenverarbeitungseinheit gesendet werden; und
wobei die MAC-Ressourcenverarbeitungseinheit zu Folgendem konfiguriert ist: Empfangen der ersten Downlink-Daten, die von der Schaltsteuereinheit gesendet werden, Durchführen einer ersten Verarbeitung an den ersten Downlink-Daten in einer MAC-Schicht, um die zweiten Downlink-Daten in einer Form eines digitalen elektrischen Signals zu erhalten, und Senden der zweiten Downlink-Daten in einer Form eines digitalen elektrischen Signals an die Schaltsteuereinheit;
wobei die optische Zugangsvorrichtung ferner eine Videoressourcenverarbeitungseinheit (33), die mit der Schaltsteuereinheit verbunden ist, umfasst, und wobei es sich bei den ersten Downlink-Daten um Videodaten handelt;
wobei die Schaltsteuereinheit konkret zu Folgendem konfiguriert ist: Empfangen der Videodaten, die von der Uplink-Verarbeitungseinheit gesendet werden, Senden der Videodaten an die Videoressourcenverarbeitungseinheit, Empfangen der Videodaten, die verarbeitet und von der Videoressourcenverarbeitungseinheit gesendet werden, Senden der verarbeiteten Videodaten an die MAC-Ressourcenverarbeitungseinheit und Empfangen der zweiten Downlink-Daten, die in einer Form eines digitalen elektrischen Signals vorliegen und die von der MAC-Ressourcenverarbeitungseinheit gesendet werden;
wobei die Videoressourcenverarbeitungseinheit zu Folgendem konfiguriert ist: Empfangen der Videodaten, die von der Schaltsteuereinheit gesendet werden, Durchführen einer zweiten Verarbeitung an den Videodaten, um verarbeitete Videodaten zu erhalten, und Senden der verarbeiteten Videodaten an die Schaltsteuereinheit; und
wobei die MAC-Ressourcenverarbeitungseinheit konkret zu Folgendem konfiguriert ist: Empfangen der verarbeiteten Videodaten, die von der Schaltsteuereinheit gesendet werden, Durchführen einer ersten Verarbeitung an den verarbeiteten Videodaten in der MAC-Schicht, um die zweiten Downlink-Daten in einer Form eines digitalen elektrischen Signals zu erhalten, und Senden der zweiten Downlink-Daten in einer Form eines digitalen elektrischen Signals an die Schaltsteuereinheit.

7. Optische Zugangsvorrichtung nach Anspruch 6, wobei die MAC-Ressourcenverarbeitungseinheit ferner dazu konfiguriert ist, die zweiten Downlink-Daten in einer Form eines digitalen elektrischen Signals zu speichern.

8. Optische Zugangsvorrichtung nach Anspruch 6 oder 7, wobei die Videoressourcenverarbeitungseinheit ferner dazu konfiguriert ist, die verarbeiteten Videodaten zu speichern.

9. Optische Zugangsvorrichtung nach einem der Ansprüche 6 bis 8, wobei die optische Zugangsvorrichtung ferner eine Schnittstelleneinheit, die mit der Schaltsteuereinheit verbunden ist, umfasst;
wobei die Schaltsteuereinheit konkret dazu konfiguriert ist, die zweiten Downlink-Daten in einer Form eines digitalen elektrischen Signals an die Schnittstelleneinheit zu senden; und
wobei die Schnittstelleneinheit zu Folgendem konfiguriert ist: Empfangen der zweiten Downlink-Daten, die in einer Form eines digitalen elektrischen Signals vorliegen und die von der Schaltsteuereinheit gesendet werden, Umwandeln der zweiten Downlink-Daten in einer Form eines digitalen elektrischen Signals in die zweiten Downlink-Daten in einer Form eines digitalen optischen Signals und Senden der zweiten Downlink-Daten in einer Form eines digitalen optischen Signals an eine physische PHY-Verarbeitungsentität.

10. Datenverarbeitungsverfahren, umfassend:
Empfangen (S101) von ersten Downlink-Daten durch eine optische Zugangsvorrichtung;
Durchführen (S102) einer ersten Verarbeitung an den ersten Downlink-Daten in einer Medienzugangssteuerungsschicht, MAC-Schicht, durch die optische Zugangsvorrichtung, um zweite Downlink-Daten in einer Form eines digitalen elektrischen Signals zu erhalten;
Umwandeln (S103) der zweiten Downlink-Daten in einer Form eines digitalen elektrischen Signals in die zweiten Downlink-Daten in einer Form eines digitalen optischen Signals durch die optische Zugangsvorrichtung; und
Senden (S104) der zweiten Downlink-Daten in einer Form eines digitalen optischen Signals durch die optische Zugangsvorrichtung an mindestens eine physische, PHY, Verarbeitungsentität;
wobei es sich bei den ersten Downlink-Daten um Videodaten handelt;
wobei das Verfahren vor dem Durchführen der ersten Verarbeitung an den ersten Downlink-Daten in einer MAC-Schicht durch die optische Zugangsvorrichtung, um zweite Downlink-Daten in einer Form eines digitalen elektrischen Signals zu erhalten, Folgendes umfasst:
Durchführen (S202) einer zweiten Verarbeitung an den Videodaten durch die optische Zugangsvorrichtung, um verarbeitete Videodaten zu erhalten; und
wobei das Durchführen der ersten Verarbeitung an den ersten Downlink-Daten in einer MAC-Schicht durch die optische Zugangsvorrichtung, um zweite Downlink-Daten in einer Form eines digitalen elektrischen Signals zu erhalten, Folgendes umfasst:
Durchführen (S204) der ersten Verarbeitung an den verarbeiteten Videodaten in der MAC-Schicht durch die optische Zugangsvorrichtung, um die zweiten Downlink-Daten in einer Form eines digitalen elektrischen Signals zu erhalten.

11. Verfahren nach Anspruch 10, wobei das Verfahren nach dem Durchführen der ersten Verarbeitung an den ersten Downlink-Daten in einer MAC-Schicht durch die optische Zugangsvorrichtung, um zweite Downlink-Daten in einer Form eines digitalen elektrischen Signals zu erhalten, ferner Folgendes umfasst:
Speichern der zweiten Downlink-Daten in einer Form eines digitalen elektrischen Signals durch die optische Zugangsvorrichtung.

## Revendications

1. Système d'accès optique, comprenant : un dispositif d'accès optique (20) et au moins une entité de traitement physique, PHY, (21) connectée au dispositif d'accès optique, dans lequel le dispositif d'accès optique est configuré pour : recevoir des premières données de liaison descendante, réaliser un premier traitement sur les premières données de liaison descendante à une couche de commande d'accès au support, MAC, dans le dispositif d'accès optique pour obtenir des deuxièmes données de liaison descendante dans une forme d'un signal électrique numérique, et envoyer, dans une forme d'un signal optique numérique, les deuxièmes données de liaison descendante dans une forme d'un signal électrique numérique à l'au moins une entité de traitement PHY ; et
chaque entité de traitement PHY parmi l'au moins une entité de traitement PHY est configurée pour : recevoir les deuxièmes données de liaison descendante qui sont dans une forme d'un signal optique numérique et qui sont envoyées par le dispositif d'accès optique, réaliser un deuxième traitement sur les deuxièmes données de liaison descendante dans une forme d'un signal optique numérique à une couche PHY pour obtenir des troisièmes données de liaison descendante dans une forme d'un signal électrique analogique, et envoyer les troisièmes données de liaison descendante dans une forme d'un signal électrique analogique à un modem câble, CM ;
dans lequel le dispositif d'accès optique comprend une unité de commande de commutation (30), et une unité de traitement de liaison montante (31) et une unité de traitement de ressource MAC (32) qui sont connectées à l'unité de commande de commutation, dans lequel
l'unité de traitement de liaison montante est configurée pour :
recevoir les premières données de liaison descendante, et envoyer les premières données de liaison descendante à l'unité de commande de commutation ;
l'unité de commande de commutation est configurée pour : recevoir les premières données de liaison descendante envoyées par l'unité de traitement de liaison montante, envoyer les premières données de liaison descendante à l'unité de traitement de ressource MAC, recevoir les deuxièmes données de liaison descendante qui sont dans une forme d'un signal électrique numérique et qui sont envoyées par l'unité de traitement de ressource MAC, et envoyer, dans une forme d'un signal optique numérique, les deuxièmes données de liaison descendante dans une forme d'un signal électrique numérique à l'au moins une entité de traitement PHY ; et
l'unité de traitement de ressource MAC est configurée pour : recevoir les premières données de liaison descendante envoyées par l'unité de commande de commutation, réaliser un premier traitement sur les premières données de liaison descendante à la couche MAC pour obtenir les deuxièmes données de liaison descendante dans une forme d'un signal électrique numérique, et envoyer les deuxièmes données de liaison descendante dans une forme d'un signal électrique numérique à l'unité de commande de commutation ;
dans lequel le dispositif d'accès optique comprend en outre une unité de traitement de ressource vidéo (33) connectée à l'unité de commande de commutation, et les premières données de liaison descendante sont des données vidéo ;
l'unité de commande de commutation est spécifiquement configurée pour : recevoir les données vidéo envoyées par l'unité de traitement de liaison montante, envoyer les données vidéo à l'unité de traitement de ressource vidéo, recevoir les données vidéo qui sont traitées et envoyées par l'unité de traitement de ressource vidéo, envoyer les données vidéo traitées à l'unité de traitement de ressource MAC, et recevoir les deuxièmes données de liaison descendante qui sont dans une forme d'un signal électrique numérique et qui sont envoyées par l'unité de traitement de ressource MAC ;
l'unité de traitement de ressource vidéo est configurée pour : recevoir les données vidéo envoyées par l'unité de commande de commutation, réaliser un troisième traitement sur les données vidéo pour obtenir des données vidéo traitées, et envoyer les données vidéo traitées à l'unité de commande de commutation ; et l'unité de traitement de ressource MAC est spécifiquement configurée pour : recevoir les données vidéo traitées envoyées par l'unité de commande de commutation, réaliser un premier traitement sur les données vidéo traitées à la couche MAC pour obtenir les deuxièmes données de liaison descendante dans une forme d'un signal électrique numérique, et envoyer les deuxièmes données de liaison descendante dans une forme d'un signal électrique numérique à l'unité de commande de commutation.

2. Système d'accès optique selon la revendication 1, dans lequel le système d'accès optique comprend en outre un diviseur optique (22), et le dispositif d'accès optique est connecté à chaque entité de traitement PHY par l'utilisation du diviseur optique ; et
le dispositif d'accès optique est spécifiquement configuré pour envoyer, par l'utilisation du diviseur optique, les deuxièmes données de liaison descendante dans une forme d'un signal optique numérique à chaque entité de traitement PHY.

3. Système d'accès optique selon la revendication 1, dans lequel l'unité de traitement de ressource MAC est en outre configurée pour stocker les deuxièmes données de liaison descendante dans une forme d'un signal électrique numérique.

4. Système d'accès optique selon l'une quelconque des revendications 1 à 3, dans lequel
l'unité de traitement de ressource vidéo est en outre configurée pour stocker les données vidéo traitées.

5. Système d'accès optique selon l'une quelconque des revendications 1 à 4, dans lequel le dispositif d'accès optique comprend en outre une unité d'interface (34) connectée à l'unité de commande de commutation ;
l'unité de commande de commutation est spécifiquement configurée pour envoyer les deuxièmes données de liaison descendante dans une forme d'un signal électrique numérique à l'unité d'interface ; et
l'unité d'interface est configurée pour : recevoir les deuxièmes données de liaison descendante qui sont dans une forme d'un signal électrique numérique et qui sont envoyées par l'unité de commande de commutation, convertir les deuxièmes données de liaison descendante dans une forme d'un signal électrique numérique en les deuxièmes données de liaison descendante dans une forme d'un signal optique numérique, et envoyer les deuxièmes données de liaison descendante dans une forme d'un signal optique numérique à l'au moins une entité de traitement PHY.

6. Dispositif d'accès optique, comprenant : une unité de commande de commutation (30), et une unité de traitement de liaison montante (31) et une unité de traitement de ressource de commande d'accès au support, MAC, (32) qui sont connectées à l'unité de commande de commutation, dans lequel
le dispositif de traitement de liaison montante est configuré pour : recevoir des premières données de liaison descendante, et envoyer les premières données de liaison descendante à l'unité de commande de commutation ;
l'unité de commande de commutation est configurée pour :
recevoir les premières données de liaison descendante envoyées par l'unité de traitement de liaison montante, envoyer les premières données de liaison descendante à l'unité de traitement de ressource MAC, et recevoir des deuxièmes données de liaison descendante qui sont dans une forme d'un signal électrique numérique et qui sont envoyées par l'unité de traitement de ressource MAC ; et
l'unité de traitement de ressource MAC est configurée pour : recevoir les premières données de liaison descendante envoyées par l'unité de commande de commutation, réaliser un premier traitement sur les premières données de liaison descendante à une couche MAC pour obtenir les deuxièmes données de liaison descendante dans une forme d'un signal électrique numérique, et envoyer les deuxièmes données de liaison descendante dans une forme d'un signal électrique numérique à l'unité de commande de commutation ;
dans lequel le dispositif d'accès optique comprend en outre une unité de traitement de ressource vidéo (33) connectée à l'unité de commande de commutation, et les premières données de liaison descendante sont des données vidéo ;
l'unité de commande de commutation est spécifiquement configurée pour : recevoir les données vidéo envoyées par l'unité de traitement de liaison montante, envoyer les données vidéo à l'unité de traitement de ressource vidéo, recevoir les données vidéo qui sont traitées et envoyées par l'unité de traitement de ressource vidéo, envoyer les données vidéo traitées à l'unité de traitement de ressource MAC, et recevoir les deuxièmes données de liaison descendante qui sont dans une forme d'un signal électrique numérique et qui sont envoyées par l'unité de traitement de ressource MAC ;
l'unité de traitement de ressource vidéo est configurée pour : recevoir les données vidéo envoyées par l'unité de commande de commutation, réaliser un deuxième traitement sur les données vidéo pour obtenir des données vidéo traitées, et envoyer les données vidéo traitées à l'unité de commande de commutation ; et l'unité de traitement de ressource MAC est spécifiquement configurée pour : recevoir les données vidéo traitées envoyées par l'unité de commande de commutation, réaliser un premier traitement sur les données vidéo traitées à la couche MAC pour obtenir les deuxièmes données de liaison descendante dans une forme d'un signal électrique numérique, et envoyer les deuxièmes données de liaison descendante dans une forme d'un signal électrique numérique à l'unité de commande de commutation.

7. Dispositif d'accès optique selon la revendication 6, dans lequel
l'unité de traitement de ressource MAC est en outre configurée pour stocker les deuxièmes données de liaison descendante dans une forme d'un signal électrique numérique.

8. Dispositif d'accès optique selon la revendication 6 ou 7, dans lequel
l'unité de traitement de ressource vidéo est en outre configurée pour stocker les données vidéo traitées.

9. Dispositif d'accès optique selon l'une quelconque des revendications 6 à 8, dans lequel le dispositif d'accès optique comprend en outre une unité d'interface connectée à l'unité de commande de commutation ;
l'unité de commande de commutation est spécifiquement configurée pour envoyer les deuxièmes données de liaison descendante dans une forme d'un signal électrique numérique à l'unité d'interface ; et
l'unité d'interface est configurée pour : recevoir les deuxièmes données de liaison descendante qui sont dans une forme d'un signal électrique numérique et qui sont envoyées par l'unité de commande de commutation, convertir les deuxièmes données de liaison descendante dans une forme d'un signal électrique numérique en les deuxièmes données de liaison descendante dans une forme d'un signal optique numérique, et envoyer les deuxièmes données de liaison descendante dans une forme d'un signal optique numérique à une entité de traitement physique, PHY.

10. Procédé de traitement de données, comprenant :
la réception (S101), par un dispositif d'accès optique, de premières données de liaison descendante ;
la réalisation (S102), par le dispositif d'accès optique, d'un premier traitement sur les premières données de liaison descendante à une couche de commande d'accès au support, MAC, pour obtenir des deuxièmes données de liaison descendante dans une forme d'un signal électrique numérique ;
la conversion (S103), par le dispositif d'accès optique, des deuxièmes données de liaison descendante dans une forme d'un signal électrique numérique en les deuxièmes données de liaison descendante dans une forme d'un signal optique numérique ; et
l'envoi (S104), par le dispositif d'accès optique, des deuxièmes données de liaison descendante dans une forme d'un signal optique numérique à au moins une entité de traitement physique, PHY ;
dans lequel les premières données de liaison descendante sont des données vidéo ;
avant la réalisation, par le dispositif d'accès optique, d'un premier traitement sur les premières données de liaison descendante à une couche MAC pour obtenir des deuxièmes données de liaison descendante dans une forme d'un signal électrique numérique, le procédé comprend en outre :
la réalisation (S202), par le dispositif d'accès optique, d'un deuxième traitement sur les données vidéo pour obtenir des données vidéo traitées ; et
la réalisation, par le dispositif d'accès optique, d'un premier traitement sur les premières données de liaison descendante à une couche MAC pour obtenir des deuxièmes données de liaison descendante dans une forme d'un signal électrique numérique comprend :
la réalisation (S204), par le dispositif d'accès optique, du premier traitement sur les données vidéo traitées à la couche MAC pour obtenir les deuxièmes données de liaison descendante dans une forme d'un signal électrique numérique.

11. Procédé selon la revendication 10, dans lequel, après la réalisation, par le dispositif d'accès optique, du premier traitement sur les premières données de liaison descendante à une couche MAC pour obtenir des deuxièmes données de liaison descendante dans une forme d'un signal électrique numérique, le procédé comprend en outre :
le stockage, par le dispositif d'accès optique, des deuxièmes données de liaison descendante dans une forme d'un signal électrique numérique.
